Europäisches Patentamt

European Patent Office

Office européen des brevets

(19)

(11) Veröffentlichungsnummer: **0 088 043**
**B1**

(12) # EUROPÄISCHE PATENTSCHRIFT

(45) Veröffentlichungstag der Patentschrift:
**19.06.85**

(21) Anmeldenummer: **83730025.0**

(22) Anmeldetag: **02.03.83**

(51) Int. Cl.⁴: **B 60 C 27/10**, B 60 C 27/06

(54) Gleitschutzkette für Fahrzeugreifen.

(30) Priorität: **03.03.82 DE 8206228 U**

(43) Veröffentlichungstag der Anmeldung:
**07.09.83 Patentblatt 83/36**

(45) Bekanntmachung des Hinweises auf die Patenterteilung:
**19.06.85 Patentblatt 85/25**

(84) Benannte Vertragsstaaten:
**AT CH DE FR GB IT LI SE**

(56) Entgegenhaltungen:
**CH - A - 518 195**

(73) Patentinhaber: **RUD-Kettenfabrik Rieger & Dietz GmbH u. Co., Friedensinsel, D-7080 Aalen 1 (DE)**

(72) Erfinder: **Rieger, Hansjörg, Dr. Ing., Saarstrasse 48, D-7080 Aalen (DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15 (DE)**

## Beschreibung

Die Erfindung betrifft eine Gleitschutzkette für Fahrzeugreifen mit einer bei montierter Kette gegen die Innenseite des Reifens zur Anlage kommenden inneren Halterung und einer bei montierter Kette gegen die Außenseite des Reifens zur Anlage kommenden äußeren Halterung sowie mit von der inneren und äußeren Halterung gehaltenen, Teile eines Laufnetzes bildenden Kettenstrangabschnitten, bei der die innere Halterung von einem über den Reifen stülpbaren Federstahlbügel gebildet wird, dessen Enden mit einem Spannstrang in Verbindung stehen, der bei montierter Kette einen zum Verbinden des Federstahlbügels dienenden ersten Abschnitt, einen zwischen der inneren und äußeren Halterung gelegenen zweiten Abschnitt und einen durch eine Durchziehöffnung eines im Bereich der äußeren Halterung angeordneten Bauteiles ziehbaren dritten Abschnitt aufweist, dessen Ende an der äußeren Halterung befestigbar ist.

Eine Gleitschutzkette der vorstehenden Art ist aus der DE-GM 8 108 431 bekannt. Bei der bekannten Gleitschutzkette verläuft der Spannstrang von einer Anschlußöse im Bereich der inneren Halterung zu einer ersten Umlenkung und anschließend von dieser zurück zu einer in unmittelbarer Nähe der Anschlußöse gelegenen zweiten Umlenkung, die ihn in den Bereich des Laufnetzes führt. Der erste Abschnitt des Spannstranges der bekannten Gleitschutzkette ist mit anderen Worten als einfacher Flaschenzug ausgebildet. Wie die Erfahrung gezeigt hat, kann es unter ungünstigen Bedingungen passieren, daß der Spannstrang bei der Montage der Gleitschutzkette an der vom Benutzer nicht einsehbaren Innenseite des Reifens eine unerwünschte Schlinge bildet, die das einwandfreie Nachvornziehen des Spannstranges verhindert. Der Benutzer der Gleitschutzkette glaubt, daß diese einwandfrei montiert ist und nimmt das Fahrzeug in Betrieb. Während des Betriebes kann es dann zur selbsttätigen Auflösung der Schlinge kommen, was zwangsläufig zu einer Lockerung des Spannstranges und der Gleitschutzkette als Ganzer führt. Es besteht die Gefahr, daß die Gleitschutzkette vom Reifen abläuft.

Der Erfindung liegt die Aufgabe zugrunde, die angedeutete Gefahr auszuschalten, indem sie die Voraussetzungen dafür schafft, daß der Benutzer der Gleitschutzkette deren einwandfreie Montage überprüfen kann. Diese Aufgabe wird erfindungsgemäß dadurch gelöst, daß mindestens ein bei einwandfrei montierter Kette durch die Durchziehöffnung des Bauteils gezogener und in dessen Nähe gelegener Teil des zweiten oder dritten Abschnitts des Spannstranges eine Farbmarkierung trägt.

Bei der erfindungsgemäßen Gleitschutzkette ermöglicht es die voll durch die Durchziehöffnung gezogene Farbmarkierung des dritten Abschnittes oder die zumindest zum Teil durch die Durchziehöffnung gezogene Farbmarkierung des zweiten Abschnittes dem Benutzer zu erkennen, daß der Spannstrang auf der Innenseite des Reifens keine Schlinge gebildet hat, sondern seine richtige Lage einnimmt, d. h. daß die Gleitschutzkette einwandfrei montiert ist.

Vorzugsweise ist der gesamte dritte Abschnitt des Spannstranges andersfarbig als der zweite Abschnitt ausgebildet. Der Benutzer der Gleitschutzkette muß den Spannstrang in diesem Fall mindestens so weit durch die Durchziehöffnung ziehen, bis der gesamte dritte Abschnitt diese passiert hat.

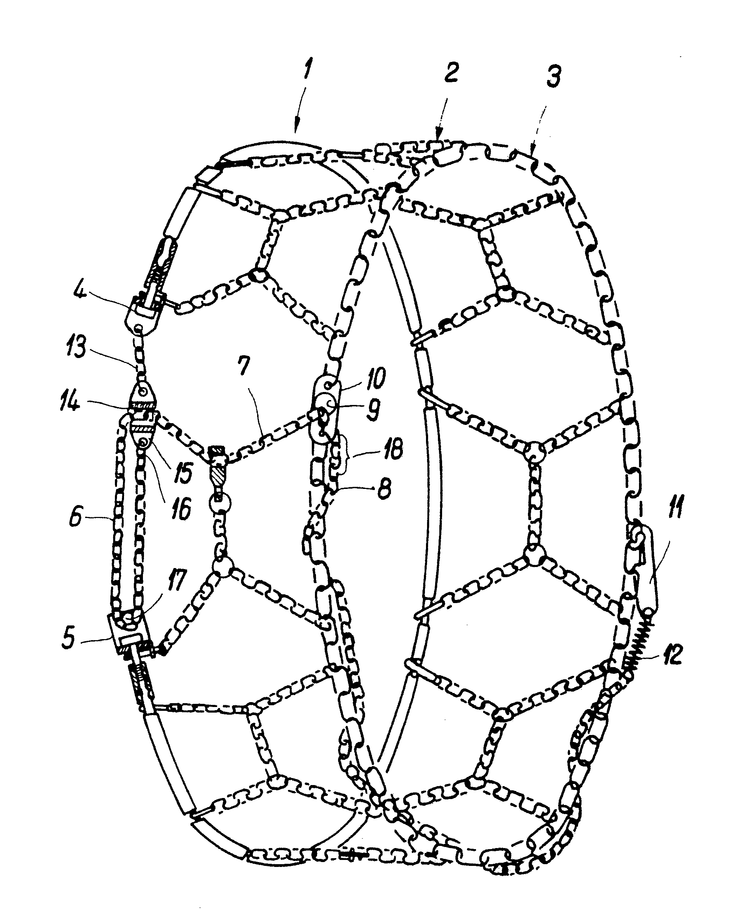

Die Erfindung wird im folgenden anhand eines in der Zeichnung dargestellten Ausführungsbeispiels näher erläutert.

In der Zeichnung ist 1 die innere Halterung für das Kettennetz 2 einer Gleitschutzkette, deren äußere Halterung 3 von einer durchgehenden geschlossenen Seitenkette gebildet wird. Die innere Halterung 1 besteht aus einem Federstahlbügel, der mit Endteilen 4 und 5 versehen ist, die einen Abstand voneinander haben, der in der Größenordnung von 10—25% der Länge des Federstahlbügels liegt. Die Endteile 4 und 5 der inneren Halterung 1 werden von einem aus einer Kette bestehenden Spannstrang überbrückt, der aus einem im Bereich der inneren Halterung gelegenen ersten Abschnitt 6, einem zwischen der inneren und äußeren Halterung gelegenen zweiten Abschnitt 7 und einem im Bereich der äußeren Halterung gelegenen dritten Abschnitt 8 besteht. Der dritte Abschnitt 8 ist durch die im wesentlichen schlüssellochförmige Durchziehöffnung 9 eines Sperrelementes 10 im Bereich der äußeren Halterung 3 ziehbar. Am Ende des dritten Abschnittes 8 befindet sich ein Verwahrungshaken 11, der an einer geeigneten Stelle der äußeren Halterung 3 verankerbar ist. Zwischen dem Verwahrungshaken 11 und dem übrigen Teil des dritten Abschnittes 8 des Spannstranges ist ein elastisches Zwischenstück 12 angeordnet.

Die Endteile 4 und 5 sind um 360° drehbar an der inneren Halterung gelagert. Aufgrund ihrer Drehbarkeit ist ein Wenden des Kettennetzes möglich. Mit dem Endteil 4 ist über mindestens ein gegenüber der inneren Halterung 1 bewegliches Verbindungselement 13 eine von einer Gleithülse gebildete Umlenkung 14 verbunden. Die Umlenkung 14 besitzt eine Anschlußöse 15, in die das dem freien Ende des Spannstranges abgewandte Spannstrangende 16 eingehängt ist. Der Spannstrangabschnitt 6 verläuft von der Anschlußöse 15 der Umlenkung 14 zum Endteil 5. Er wird dort durch eine zweite Umlenkung 17, die von einer Rolle oder einem Zapfen gebildet wird, umgelenkt und zur Umlenkung 14 zurückgeführt, von der der Spannstrang über die Lauffläche zur äußeren Halterung 3 verläuft.

Beim Montieren der Gleitschutzkette wird die innere Halterung 1 aufgespreizt. Dies bedeutet, daß Teile des zweiten Abschnittes 7 und gegebenenfalls Teile des dritten Abschnittes 8 des Spannstranges die Umlenkung 14 passieren und vorübergehend in den Bereich der inneren Halterung 1 gelangen. Sobald die innere Halterung 1 über den Reifen gestülpt ist, federt sie in ihre Ausgangslage zurück. Hierbei kann es zur unerwünschten Schlingenbildung im Bereich der inneren Halterung kommen. Um dem Benutzer der Kette eine Schlingenbildung erkennbar zu machen, ist der Spannstrang mit einer Farbmarkierung versehen, und zwar befindet sich die Farbmarkierung auf einem Teil des zweiten Abschnittes 7 oder des dritten Abschnittes 8 des Spannstranges, der bei einwandfrei montierter Kette durch die Durchziehöffnung 9 des Bauteiles 10 gezogen ist. Die Farbmarkierung ist in der Zeichnung durch die Klammer 18 angedeutet, die vier Kettenglieder des dritten Abschnittes des Spannstranges erfaßt. Die vier Kettenglieder sind mit anderen Worten Markierungsträger, welche nach ihrer Art und nach der Methode ihrer Anordnung geeignet sind, als Bedeutungsträger zu dienen.

In der Zeichnung befindet sich die Farbmarkierung in unmittelbarer Nähe des Bauteiles 10. Es ist dies die Position, die die Farbmarkierung bei neuem Reifen und unverschlissener Kette einnimmt. Bei abgefahrenem Reifen und verschlissener Kette kann sich der Abstand der Farbmarkierung 18 vom Bauteil 10 vergrößern. In jedem Fall muß jedoch mindestens ein Teil einer Farbmarkierung durch die Durchziehöffnung 9 hindurchgezogen sein.

Anstelle von nur vier Gliedern des dritten Abschnittes 8 könnten auch sämtliche Glieder dieses Abschnittes 8 andersfarbig ausgebildet sein als der zweite Abschnitt 7 des Spannstranges 6, 7, 8.

**Patentansprüche**

1. Gleitschutzkette für Fahrzeugreifen mit einer bei montierter Kette gegen die Innenseite des Reifens zur Anlage kommenden inneren Halterung (1) und einer bei montierter Kette gegen die Außenseite des Reifens zur Anlage kommenden äußeren Halterung (3), sowie mit von der inneren und äußeren Halterung gehaltenen, Teile eines Laufnetzes bildenden Kettenstrangabschnitten, bei der die innere Halterung von einem über den Reifen stülpbaren Federstahlbügel gebildet wird, dessen Enden (4, 5) mit einem Spannstrang in Verbindung stehen, der bei montierter Kette einen zum Verbinden des Federstahlbügels dienenden ersten Abschnitt (6), einen zwischen der inneren und äußeren Halterung gelegenen zweiten Abschnitt (7) und einen durch eine Durchziehöffnung (9) eines im Bereich der äußeren Halterung angeordneten Bauteiles (10) ziehbaren dritten Abschnitt (8) aufweist, dessen Ende (11) an der äußeren Halterung befestigbar ist, dadurch gekennzeichnet, daß mindestens ein bei einwandfrei montierter Kette durch die Durchziehöffnung (9) des Bauteiles (10) gezogener und in dessen Nähe gelegener Teil des zweiten oder dritten Abschnitts (7, 8) des Spannstranges (6, 7, 8) eine Farbmarkierung (18) trägt.

2. Gleitschutzkette nach Anspruch 1, dadurch gekennzeichnet, daß der dritte Abschnitt (8) des Spannstranges (6, 7, 8) andersfarbig als der zweite Abschnitt (7) ausgebildet ist.

**Claims**

1. Anti-skid chain for vehicle tyres having an internal support means (1) coming into contact with the inside of the tyre when the chain is fitted, and having an external support means (3) coming into contact with the outside of the tyre when the chain is fitted, also having chain strand sections forming parts of a tread net and retained by the internal and external support means, wherein the internal support means is formed by a spring wire bracket fitted over the tyre, the ends (4, 5) of which are in communication with a tensioning strand, which exhibits, when the chain is fitted, a first section (6) serving to connect the ends of the spring steel bracket, a second section (7) located between the internal and external support means, and a third section (8) adapted to be pulled through a pull-through aperture (9) of a component (10) arranged in the region of the external support means, the end (11) of which is attachable to the external support means, characterised in that at least one part of the second or third section (7, 8) of the tensioning strand (6, 7, 8) which is pulled through the pull-through aperture (9) of the component (10) and located in proximity thereto when the chain is correctly fitted, carries a colour marking (18).

2. Anti-skid chain according to Claim 1, characterised in that the third section (8) of the tensioning strand (6, 7, 8) is made in a different colour from the second section (7).

**Revendications**

1. Chaîne antidérapante pour pneumatiques d'automobiles avec une attache intérieure (1) reposant, lorsque la chaîne est montée, sur la partie intérieure du pneumatique et une attache extérieure (3) reposant, lorsque la chaîne est montée, sur la partie extérieure du pneumatique ainsi que des tronçons de chaîne maintenus par les attaches extérieure et intérieure formant un cercle de roulement, pour laquelle l'attache intérieure est formée par un étrier en acier à ressort retroussable sur le pneumatique et dont les extrémités (4, 5) sont en relation avec un tronçon tendeur qui présente, lorsque la chaîne est montée, une première section (6) servant à relier les extrémités de l'étrier en acier à ressort, une seconde section (7) placée entre l'attache extérieure et l'attache intérieure et une troisième section (8) pouvant être introduite à travers l'ouverture d'étirage (9) d'un élément (10) situé dans la zone de l'attache extérieure et dont l'extrémité (11) est fixable à l'attache extérieure, caractérisé en ce que, la chaîne étant correctement montée, au moins une partie de la seconde ou de la troisième section (7, 8) du tronçon tendeur (6, 7, 8) tirée à travers l'ouverture d'étirage (9) de l'élément (10) et se trouvant à sa proximité, porte une marque de couleur (18).

2. Chaîne antidérapante suivant la revendication 1, caractérisé en ce que la troisième section (8) du tronçon tendeur (6, 7, 8) a une autre couleur que la seconde section (7).